# EUROPÄISCHE PATENTANMELDUNG

(11) **EP 2 764 966 A1**
(43) Veröffentlichungstag der Anmeldung: **13.08.2014**
(21) Anmeldenummer: 14152607.9
(22) Anmeldetag: 27.01.2014
(51) Int. Cl.: B28D 5/04, B23H 1/02

(54) **Vorrichtung und Verfahren zum Bearbeiten eines Werkstücks**

(30) Priorität: 06.02.2013 DE 102013201932
(71) Anmelder: ROBERT BOSCH GMBH, 70442 Stuttgart (DE)
(72) Erfinder: Puzik, Arnold, 75392 Deckenpfronn (DE); Schoepf, Martin, 70499 Stuttgart (DE); Rueckauf, Andreas, 71277 Rutesheim (DE); Fuerderer, Karl, 70569 Stuttgart (DE)

(57) **Zusammenfassung**

Die Erfindung betrifft eine Vorrichtung (10) zum Bearbeiten eines Werkstücks (1), insbesondere zum Austrennen von Wafern (100) aus einem Siliziumblock, mit einem drahtförmigen Sägewerkzeug (30) und wenigstens einer Spannungsquelle (32), deren einer Pol mit dem Werkstück (1) und deren anderer Pol mit dem Sägewerkzeug (30) verbindbar ist, und mit einer Einrichtung (20) zum Anordnen des Werkstücks (1) und des Sägewerkzeugs (30) in einem Dielektrikum, insbesondere in einer dielektrischen Flüssigkeit. Erfindungsgemäß ist es vorgesehen, dass das Sägewerkzeug (30) mehrere, parallel zueinander angeordnete Drahtelemente (18) zum gleichzeitigen Bearbeiten des Werkstücks (1) an unterschiedlichen, örtlich voneinander getrennten Bereichen aufweist, und dass die Drahtelemente (18) eine Dicke bzw. einen Durchmesser von weniger als 100µm, vorzugsweise etwa 50µm, aufweisen.

## Beschreibung

### Stand der Technik

Die Erfindung betrifft eine Vorrichtung zum Bearbeiten eines Werkstücks nach dem Oberbegriff des Anspruchs 1. Ferner betrifft die Erfindung ein Verfahren zum Bearbeiten eines Werkstücks, vorzugsweise unter Verwendung einer erfindungsgemäßen Vorrichtung.

Eine Vorrichtung nach dem Oberbegriff des Anspruchs 1 ist aus der DE 10 2010 040 535 A1 der Anmelderin bekannt. Bei der bekannten Vorrichtung ist ein drahtförmiges Sägewerkzeug mit einem Pol einer Spannungsquelle, und ein Werkstück, das mittels des Sägewerkzeugs bearbeitet wird, mit dem anderen Pol der Spannungsquelle verbunden. Im Bearbeitungsbereich sind das Werkstück und das Sägewerkzeug von einem Dielektrikum umgeben. Die bekannte Anordnung ermöglicht einen thermischen bzw. elektrochemischen Materialabtrag des Werkstücks, beispielsweise zum Abtrennen von einzelnen Teilen von dem Werkstück.

### Offenbarung der Erfindung

Ausgehend von dem dargestellten Stand der Technik liegt der Erfindung die Aufgabe zugrunde, eine Vorrichtung zum Bearbeiten eines Werkstücks nach dem Oberbegriff des Anspruchs 1 derart weiterzubilden, dass bei relativ großer Sägeleistung ein möglichst geringer Materialverlust an dem zu bearbeitenden Werkstück erzielt werden soll. Diese Aufgabe wird erfindungsgemäß bei einer Vorrichtung zum Bearbeiten eines Werkstücks mit den Merkmalen des Anspruchs 1 dadurch gelöst, dass das Sägewerkzeug mehrere, parallel zueinander angeordnete Drahtelemente zum gleichzeitigen Bearbeiten des Werkstücks aufweist, und dass die Drahtelemente eine Dicke bzw. einen Durchmesser von weniger als 100µm, vorzugsweise etwa 50µm, aufweisen. Bei der Erfindung wird ein thermischer bzw. elektrochemischer Materialabtrag an einem Werkstück unter Verwendung eines einzelnen (drahtförmigen) Elements mit einer mechanisch wirkenden Drahtsäge kombiniert, wobei gleichzeitig durch die Wahl einer geeigneten Dicke bzw. eines geeigneten Durchmessers des drahtförmigen Sägewerkzeugs gegenüber dem Stand der Technik verringerte Schnittbreiten erzielbar sind (bei der Verwendung eines etwa 50µm im Durchmesser aufweisenden Drahts beispielsweise eine Schnittbreite von etwa 70µm), so dass durch die verringerte Schnittbreite ein verringerter Materialverlust auftritt.

Vorteilhafte Weiterbildungen der erfindungsgemäßen Vorrichtung zum Bearbeiten eines Werkstücks sind in den Unteransprüchen angegeben.

Zur Erzeugung einer möglichst großen Sägeleistung bei geringem vorrichtungstechnischem Aufwand ist es insbesondere vorgesehen, dass jeweils eine Teilmenge aller Drahtelemente gleichzeitig mit der wenigstens einen Spannungsquelle verbunden ist.

Um die Anzahl der mit den Drahtelementen verbundenen Spannungsquellen zu reduzieren, ist es in einer ganz besonders bevorzugten Ausgestaltung der Erfindung vorgesehen, dass die Gesamtheit aller Drahtelemente in mehrere, vorzugsweise jeweils eine gleiche Anzahl von Drahtelementen aufweisenden Gruppen unterteilt ist, und dass die Drahtelemente jeder Gruppe wechselweise mit einer Spannungsquelle verbunden sind. Es wird sich dabei die Erkenntnis zunutze gemacht, dass eine ständige Spannungsbeaufschlagung eines Drahtelements aus Gründen einer thermischen Überbeanspruchung vermieden werden sollte. Vorzugsweise wird die Spannungsquelle nur etwa 20% einer gesamten Bearbeitungszeit mit dem Sägewerkzeug verbunden bzw. mit Spannung beaufschlagt, um eine Überhitzung des Werkzeugs (und ggf. des Werkstücks) zu vermeiden. Dadurch, dass es erfindungsgemäß vorgesehen ist, dass ein und dieselbe Spannungsquelle wechselweise mit unterschiedlichen Drahtelementen verbindbar ist, kann somit eine Spannungsquelle mehreren Drahtelementen zugeordnet werden, so dass sich die Anzahl der benötigen Spannungsquellen beispielsweise um den Faktor 5 (in Bezug zur Anzahl der Drahtelemente) reduzieren lässt.

Bei der zuletzt genannten Variante ist es ganz besonders bevorzugt vorgesehen, dass die Drahtelemente einer Gruppe mittels eines Demultiplexers mit der Spannungsquelle verbunden sind. Ein derartiger Demultiplexer eignet sich besonders gut zum Einsatz bei den zur Diskussion stehenden erfindungsgemäßen Vorrichtungen.

Eine konstruktiv besonders bevorzugte Ausgestaltung zur Ausbildung der Vielzahl von parallel zueinander angeordneten Drahtelementen besteht darin, dass das Sägewerkzeug einen endlosen Draht aufweist, der zur Ausbildung der parallelen Drahtelemente um wenigstens zwei Drahtführungswalzen geführt ist, die parallel zueinander angeordnet sind.

Um Spannungsverluste bei der Verwendung eines endlosen Drahts zwischen den einzelnen Drahtelementen zu vermeiden, kann es vorgesehen sein, dass der mit dem Sägewerkzeug verbundene Pol der wenigstens einen Spannungsquelle in geringem Abstand zum Werkstück, insbesondere im Bereich der Einrichtung zum Anordnen des Werkstücks und des Sägewerkzeugs in einer dielektrischen oder elektrisch leitfähigen Flüssigkeit, mit dem Drahtelement verbunden ist, und dass die Kontaktfläche zwischen den Drahtelementen und den Drahtführungswalzen elektrisch isoliert ausgebildet ist. Durch die elektrisch isolierte Ausbildung der Kontaktflächen zwischen den Drahtführungswalzen und dem Draht wird insbesondere ein unmittelbarer Kurzschluss der in geringem Abstand von beispielsweise 100µm nebeneinander angeordneten Drahtabschnitte über die Drahtführungswalzen vermieden.

Die Erfindung umfasst auch ein Verfahren zum Bearbeiten eines Werkstück, insbesondere zum Austrennen von Wafern aus einem Siliziumblock, vorzugsweise unter Verwendung einer erfindungsgemäßen Vorrichtung, bei dem mehrere, mit einem Pol einer Spannungsquelle verbundene Drahtelemente gleichzeitig ein Werkstück bearbeiten. Erfindungsgemäß ist es vorgesehen, dass die Spannungsquelle wechselweise mit unterschiedlichen Drahtelementen verbunden wird. Dadurch lässt sich die Anzahl der benötigten Spannungsquellen bei mehreren Drahtelementen reduzieren.

Ganz besonders bevorzugt ist dabei ein Verfahren, bei dem das Verhältnis der Zeitdauer zwischen der an dem Drahtelement angelegten Spannung und einer spannungsfreien Zeit zwischen 1:2 und 1:10, vorzugsweise 1:5 beträgt. Ein derartiges Verhältnis ist vorteilhaft, da eine thermische Überbeanspruchung des Sägewerkzeugs bzw. des Werkstücks vermieden wird.

Es kann auch vorgesehen sein, dass das Werkstück mit dem Pluspol und das Drahtelement mit dem Minuspol der Spannungsquelle verbunden sind. In dieser Ausgestaltung wird daher im Wesentlichen das Funktionsprinzip des elektrochemischen Abtragens (ECM) verwendet. Der durch die angelegte Spannung erzeugte fließende Strom bewirkt dabei, dass sich aus dem Material des Werkstücks Ionen lösen, wodurch das Werkstück abgetragen wird. Neben einer deutlich vergrößerten Abtragsrate, verglichen mit einem reinen abrasiven Abtragen des Werkstücks, wird durch das Verwenden eines elektrochemischen Abtragens das Erzeugen von Bearbeitungen mit höchster Präzision im Mikrometerbereich ermöglicht. Darüber hinaus werden nach dem Sägen Oberflächen mit einer höchsten Güte erhalten.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine vereinfachte Darstellung einer erfindungsgemäßen Vorrichtung zum Bearbeiten eines Werkstücks, insbesondere zum Austrennen von Wafern aus einem Siliziumblock,
- Fig. 2: einen Schnitt im Bereich eines Werkstücks unter Verwendung einer erfindungsgemäßen Vorrichtung während der Bearbeitung,
- Fig. 3: eine Prinzipdarstellung der Schaltung zwischen den einzelnen Drahtabschnitten bzw. Drahtelementen des Sägewerkzeugs der Vorrichtung gemäß Fig. 1 und Strompulsgeneratoren mittels eines Demultiplexers und
- Fig. 4: den zeitlichen Verlauf der einzelnen Spannungsimpulse zwischen den Drahtelementen und einem Strompulsgenerator gemäß Fig. 3.

Gleiche Elemente bzw. Elemente mit gleicher Funktion sind in den Figuren mit den gleichen Bezugsziffern versehen.

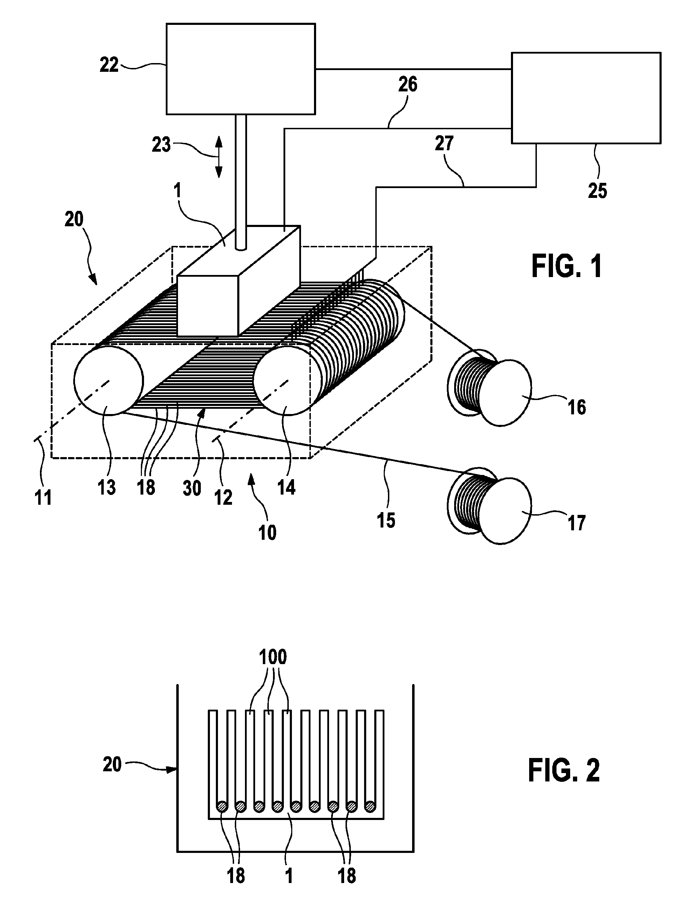

In den Fig. 1 bis 3 ist eine erfindungsgemäße Vorrichtung 10 zum Bearbeiten eines Werkstücks, insbesondere in Form eines Siliziumblocks 1, dargestellt. Aus dem Werkstück bzw. dem Siliziumblock 1 werden mittels der Vorrichtung 10 eine Vielzahl von scheibenförmigen Wafern 100 hergestellt, die als Bestandteil von Solarzellen dienen. Bei dem in der Fig. 2 vereinfacht dargestellten Siliziumblock 1 sind der Einfachheit halber bzw. der besseren Erkennbarkeit halber lediglich einige der noch nicht von dem Siliziumblock 1 herausgetrennten Wafer 100 dargestellt.

Die Vorrichtung 10 umfasst eine Einrichtung 20, z.B. in Form eines wannenförmigen Behälters, in dem der Siliziumblock 1, zusammen mit einem Teil eines Sägewerkzeugs 30, wie nachfolgend noch näher erläutert, angeordnet sind. Die Einrichtung 20 dient insbesondere der Aufnahme eines Dielektrikums, insbesondere einer dielektrischen Flüssigkeit auf Öl- oder Wasserbasis. Das Sägewerkzeug 30 umfasst zwei, in Drehachsen 11, 12 drehbar gelagerte Drahtführungswalzen 13, 14, die parallel zueinander angeordnet sind. Um die beiden Drahtführungswalzen 13, 14 ist ein endloser Sägedraht 15 gewickelt, dessen beide Drahtendabschnitte auf Drahtspulen 16, 17 aufgespult sind. Die Kontaktflächen der Drahtführungswalzen 14, 15, an denen der Sägedraht 15 anliegt, sind elektrisch isoliert ausgebildet. Durch das Umwickeln der Drahtführungswalzen 13, 14 mit dem Sägedraht 15 wird eine Vielzahl von parallel zueinander angeordneten Drahtelementen 18 geschaffen, die sich in jeweils gleichem Abstand zu dem Werkstück 1 befinden. Bei Verwendung eines im Querschnitt runden Sägedrahtes 15 weist dieser beispielsweise einen Durchmesser von etwa 50µm auf. Mittels eines derartigen Sägedrahtes 15 lassen sich Schnittbreiten in dem Siliziumblock 1 von etwa 70µm erzielen.

Um zum Austrennen der Wafer 100 aus dem Siliziumblock 1 eine Relativbewegung zwischen dem Siliziumblock 1 und den Drahtelementen 18 zu erzielen, ist der Siliziumblock 1 beispielhaft mit einer Vorschubeinrichtung 22 gekoppelt, die den Siliziumblock 1 entsprechend der Fig. 1 in Richtung des Doppelpfeils 23 bewegen kann. Die Richtung des Doppelpfeils 23 ist dabei senkrecht zur Erstreckung der Drahtelemente 18. Selbstverständlich liegt es auch im Rahmen der Erfindung, das Sägewerkzeug 30 mit einer entsprechenden Vorschubeinrichtung auszustatten und den Siliziumblock 1 ortsfest innerhalb der Einrichtung 20 zu positionieren.

Die Vorrichtung 10 umfasst darüber hinaus einen Erodiergenerator 25, der eine Spannungsquelle ausbildet. Der Pluspol des Erodiergenerators 25 ist vorzugsweise mit dem Silizium block 1 über eine erste Leitung 26 verbunden, während die Drahtelemente 18 über wenigstens eine zweite Leitung 27 mit dem Minuspol des Erodiergenerators 25 gekoppelt sind. Die Anbindung der wenigstens einen Leitung 27 an die Drahtelemente 18 erfolgt dabei bevorzugt in relativ geringem Abstand zu dem Siliziumblock 1, vorzugsweise innerhalb der Einrichtung 20. Bezüglich der elektrochemischen Vorgänge beim Bearbeiten bzw. Sägen des Siliziumblocks 1 wird auf die DE 10 2010 040 535 A1 der Anmelderin verwiesen, die insofern Bestandteil dieser Anmeldung sein soll.

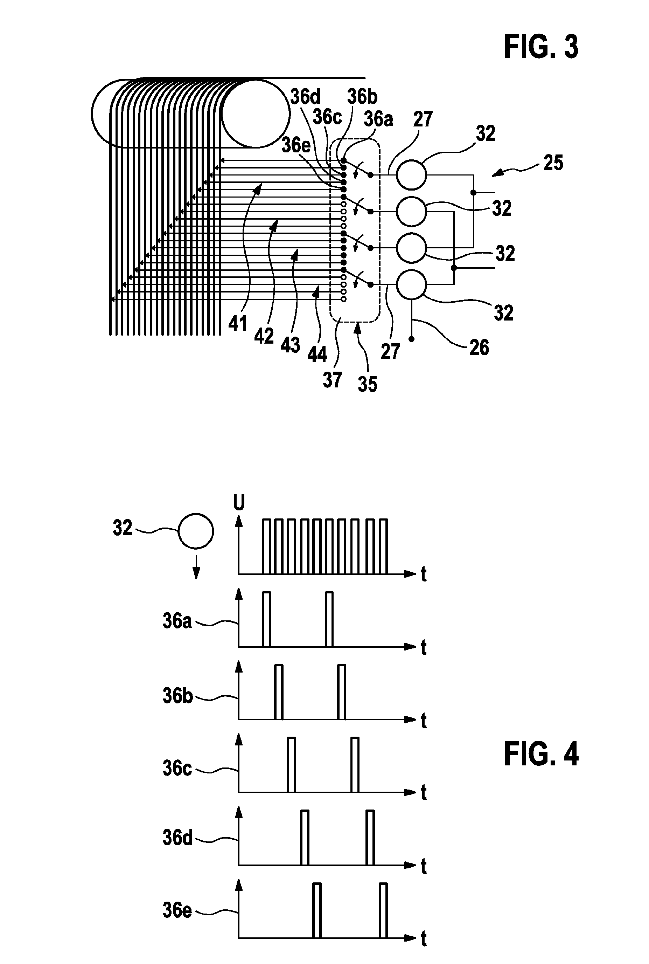

Der Erodiergenerator 25 umfasst, wie insbesondere anhand einer Zusammenschau der Fig. 1 und 3 erkennbar ist, eine Vielzahl von in der Regel identisch ausgebildeten Strompulsgeneratoren 32 zur Erzeugung von Spannungsimpulsen, wobei in der Fig. 2, der Einfachheit halber lediglich vier Strompulsgeneratoren 32 dargestellt sind. Die Strompulsgeneratoren 32 sind mittels eines Demultiplexers 35 mit den einzelnen Drahtelementen 18 wechselweise verbunden. Im dargestellten Ausführungsbeispiel sind beispielsweise jeweils fünf, unmittelbar nebeneinander angeordnete Drahtelemente 18 über Anschlussleitungen 36a bis 36e mit dem Ausgang des Demultiplexers 35 gekoppelt. Der den Anschlussleitungen 36a bis 36e zugeordnete Strompulsgenerator 32 ist über eine Transistoren aufweisende Schaltung 37 des Demultiplexers 35 wechselweise mit jeweils einer der Anschlussleitungen 36a bis 36e verbunden, wobei der Wechsel zwischen den einzelnen Anschlussleitungen 36a bis 36e vorzugsweise dann erfolgt, wenn der Strompulsgenerator 32 einen Spannungsimpuls generiert, wie dies anhand der Fig. 3 dargestellt ist.

Bei dem dargestellten Ausführungsbeispiel sind die insgesamt zwanzig Drahtelemente 18 in vier Teilmengen bzw. Gruppen 41 bis 44 mit jeweils fünf Drahtelementen 18 aufgeteilt, wobei jede der Gruppen 41 bis 44 einem der insgesamt vier Strompulsgeneratoren 32 zugeordnet ist. Ergänzend wird erwähnt, dass bei den zur Diskussion stehenden Vorrichtungen 10 zum Herstellen von Wafern 100 aus einem Siliziumblock 1 beispielsweise insgesamt bis zu 2500 Drahtelemente 18 vorgesehen sein können, die dann entsprechend mit beispielsweise 500 Strompulsgeneratoren 32 verbunden bzw. gekoppelt sind.

Das Bearbeiten des Siliziumblocks 1 durch die Vorrichtung 10 erfolgt dadurch, dass durch eine entsprechende Ansteuerung der Vorschubeinrichtung 22 der Siliziumblock 1 gegen die Drahtelemente 18 des Sägewerkzeugs 30 bewegt werden, wobei die Drahtelemente 18 entsprechend der Ansteuerung durch den Demultiplexer 35 zeitweise periodisch mit den Pulsgeneratoren 32 des Erodiergenerators 25 verbunden sind und dadurch eine thermische Bearbeitung des Materials des Siliziumblocks 1 erfolgt, der einen Materialabtrag an dem Siliziumblock 1 zur Erzeugung der Schnitte für die Wafer 100 zur Folge hat.

Die soweit beschriebene Vorrichtung 10 zum Bearbeiten eines Werkstücks kann in vielfältiger Art und Weise abgewandelt bzw. modifiziert werden, ohne vom Erfindungsgedanken abzuweichen. Dieser besteht in der Verwendung einer Vielzahl von als Sägeelementen dienenden Drahtabschnitten, die wechselweise mit Spannungsquellen verbindbar sind, um ein Werkstück zu bearbeiten bzw. zu sägen.

## Patentansprüche

1. Vorrichtung (10) zum Bearbeiten eines Werkstücks (1), insbesondere zum Austrennen von Wafern (100) aus einem Siliziumblock, mit einem drahtförmigen Sägewerkzeug (30) und wenigstens einer Spannungsquelle (32), deren einer Pol mit dem Werkstück (1) und deren anderer Pol mit dem Sägewerkzeug (30) verbindbar ist, und mit einer Einrichtung (20) zum Anordnen des Werkstücks (1) und des Sägewerkzeugs (30) in einem Dielektrikum oder einem Elektrolyten,
**dadurch gekennzeichnet,**
**dass** das Sägewerkzeug (30) mehrere, parallel zueinander angeordnete Drahtelemente (18) zum gleichzeitigen Bearbeiten des Werkstücks (1) aufweist, und dass die Drahtelemente (18) eine Dicke bzw. einen Durchmesser von weniger als 100µm, vorzugsweise etwa 50µm, aufweisen.

2. Vorrichtung nach Anspruch 1,
**dadurch gekennzeichnet,**
**dass** jeweils eine Teilmenge der Drahtelemente (32) gleichzeitig mit der wenigstens einen Spannungsquelle (32) verbunden ist.

3. Vorrichtung nach Anspruch 2,
**dadurch gekennzeichnet,**
**dass** die Gesamtheit der Drahtelemente (18) des Sägewerkzeugs (30) in mehrere, vorzugsweise jeweils eine gleiche Anzahl von Drahtelementen (18) aufweisenden Gruppen (41 bis 44) unterteilt ist, und dass die Drahtelemente (18) jeder Gruppe (41 bis 44) wechselweise mit einer Spannungsquelle (32) verbunden sind.

4. Vorrichtung nach Anspruch 3,
**dadurch gekennzeichnet,**
**dass** die Drahtelemente (18) einer Gruppe (41 bis 44) unter Zwischenschaltung eines Demultiplexers (35) mit der Spannungsquelle (32) verbunden sind.

5. Vorrichtung nach einem der Ansprüche 1 bis 4,
**dadurch gekennzeichnet,**
**dass** die Spannungsquelle (32) als Strompulsgenerator zur Erzeugung von Spannungsimpulsen ausgebildet ist.

6. Vorrichtung nach einem der Ansprüche 1 bis 5,
**dadurch gekennzeichnet,**
**dass** das Sägewerkzeug (30) einen endlosen Draht (15) aufweist, der zur Ausbildung der parallelen Drahtelemente (18) um wenigstens zwei Drahtführungswalzen (14, 15) geführt ist, die parallel zueinander angeordnet sind.

7. Vorrichtung nach Anspruch 6,
**dadurch gekennzeichnet,**
**dass** der mit dem Sägewerkzeug (30) verbundene Pol der wenigstens einen Spannungsquelle (32) in geringem Abstand zum Werkstück (1), insbesondere im Bereich der Einrichtung (20) zum Anordnen des Werkstücks (1) und des Sägewerkzeugs (30) in einer dielektrischen oder elektrisch leitfähigen Flüssigkeit, mit dem Drahtelement (18) verbunden ist, und dass die Kontaktfläche zwischen den Drahtelementen (18) und den Drahtführungswalzen (14, 15) elektrisch isoliert ausgebildet ist.

8. Verfahren zum Bearbeiten eines Werkstücks (1), insbesondere zum Austrennen von Wafern (100) aus einem Siliziumblock, vorzugsweise unter Verwendung einer Vorrichtung (10) nach einem der Ansprüche 1 bis 7, bei dem mehrere, mit einem Pol einer Spannungsquelle (32) verbundene Drahtelemente (18) gleichzeitig das Werkstück (1) bearbeiten,
**dadurch gekennzeichnet,**
**dass** die Spannungsquelle (32) wechselweise mit unterschiedlichen Drahtelementen (18) verbunden wird.

9. Verfahren nach Anspruch 8,
**dadurch gekennzeichnet,**
**dass** das Verhältnis der Zeitdauer zwischen der an dem Drahtelement (18) angelegten Spannung und einer spannungsfreien Zeit zwischen 1:2 und 1:10, vorzugsweise 1:5 beträgt.

10. Verfahren nach Anspruch 8 oder 9,
**dadurch gekennzeichnet,**
**dass** das Werkstück (1) mit dem Pluspol, und das Drahtelement (18) mit dem Minuspol der Spannungsquelle (32) verbunden werden, und dass das Werkstück (1) in einem flüssigem Dielektrikum oder Elektrolyten angeordnet ist.
